# EUROPEAN PATENT APPLICATION

(11) **EP 4 779 317 A1**
(43) Date of publication of application: **22.07.2026**
(21) Application number: 24865046.7
(22) Date of filing: 04.07.2024
(51) Int. Cl.: G01N 35/04, B65G 54/02

(54) **SPECIMEN CONVEYANCE DEVICE**

(30) Priority: 12.09.2023 JP 2023147809
(71) Applicant: Hitachi High-Tech Corporation, Minato-ku Tokyo 105-6409 (JP)
(72) Inventor: WATANABE, Saori, Tokyo 105-6409 (JP); YASUI, Akihiro, Tokyo 105-6409 (JP); HARADA, Masataka, Tokyo 105-6409 (JP); YANO, Shigeru, Tokyo 105-6409 (JP)
(74) Representative: Strehl & Partner mbB
(86) International application number: PCT/JP2024/024176
(87) International publication number: WO 2025/057539

(57) **Abstract**

[Problem] A sample transport apparatus is provided which is capable of replacing sliding portions with ease and also in a short time without changing the magnetic attractive force generated between a magnetic pole and a magnetic substance.

[Solution] A sample transport apparatus 501 uses an electromagnetic force acting between a magnet or magnetic substance 104 and a magnetic pole 107 to transport a sample container 103 placed on the top face of a transport flat 108. The sample transport apparatus 501 includes a reference position frame 202 that detachably supports the transport flat 108. The reference position frame 202 has a top face position determining portion 202A and a lifting mechanism 301, 302, 303, 304, the top face position determining portion 202A coming into contact with the top face of the transport flat 108 to determine the position of the top face, the lifting mechanism 301, 302, 303, 304 supporting the lower surface of the transport flat 108 to move it in a direction of bringing the top face of the transport flat 108 into contact with the lower surface of the top face position determining portion 202A and in a direction of separating the top face of the transport flat 108 from the top face position determining portion 202A.

## Description

### Technical Field

The present invention relates to a sample transport apparatus in a sample examination automation system that performs processing necessary for analysis of a biological sample (hereinafter referred to as a "sample") such as blood, plasma, serum, urine, or other body fluids.

### Background Art

A sample examination automation system for clinical performs examination on a sample. Since diagnosis and treatment policy of a doctor are determined based on a result of the examination of the sample, there is a demand for a sample transport apparatus that automatically transports a large number of samples to an analyzer and does not stop, and a sample transport apparatus that can immediately solve a problem even if the problem occurs.

As a sample transport apparatus that transports a large number of samples, there is an electromagnetic transport system.

For example, in a transport system described in PTL 1, a plurality of coils are disposed along a transport direction, and each of the plurality of coils includes a stator including a winding and a core, and a magnet that can face the plurality of coils. In addition, a mover that is movable along the transport direction by an electromagnetic force received by the magnet from the plurality of coils is provided, and the stator includes one of a first transport member and a second transport member for guiding the moving mover in the transport direction.

The first transport member includes an upper transport member and a lower transport member that are disposed above and below the second transport member, respectively, and the mover includes the other of the first transport member and the second transport member. A transport position of the mover is adjusted such that a top surface of the magnet is located below or above an equilibrium position where a magnetic attractive force generated between the core and the magnet and gravity acting on the mover are balanced. The mover is transported in a state where the second transport member is in contact with the lower transport member or the upper transport member according to the transport position.

### Citation List

### Patent Literature

PTL 1: JP2021-125979A

### Summary of Invention

### Technical Problem

The transport system described in PTL 1 can reduce contaminants generated from a sliding portion of the mover and the stator without increasing a size and complexity of the apparatus.

However, in the transport system described in PTL 1, although the transport position of the mover can be adjusted from a balance between the magnetic attractive force generated between the core and the magnet and the gravity acting on the mover, since the transport member for adjusting the transport position is in contact with another transport member, the generated contaminants can be reduced. However, it is difficult to avoid generation of the contaminants and deterioration from the sliding portion.

Since it is difficult to prevent generation of the contaminants and deterioration from the sliding portion, it is necessary to replace the sliding portion with a new sliding portion when the sliding portion deteriorates.

Since the replacement of the sliding portion in the sample transport apparatus involves stopping an operation of the apparatus, it is desired to execute the replacement in a short time. Further, even after the replacement of the sliding portion, a positional relationship (mutual distance) between the mover and the stator needs to be the same as that before the replacement of the sliding portion. Therefore, when replacing the sliding portion, it is necessary to perform an adjustment operation of reattaching the mover and the stator such that a distance between the mover and the stator is constant.

This work is complicated, requires a large amount of work, and requires a long time.

An object of the invention is to provide a sample transport apparatus capable of easily replacing a sliding portion in a short time without changing a magnetic attractive force generated between a magnetic pole and a magnetic substance.

### Solution to Problem

In order to achieve the above object, the invention is implemented as follows.

A sample transport apparatus for transporting a sample container placed on a top surface of a transport flat by use of an electromagnetic force acting between either a magnet or a magnetic substance and a magnetic pole, the sample transport apparatus including a reference position frame that detachably supports the transport flat, the reference position frame including a top surface position determining portion that comes into contact with the top surface of the transport flat to determine a position of the top surface, and a lifting mechanism that supports an lower surface of the transport flat to move the transport flat in a direction of bringing the top surface of the transport flat into contact with a lower surface of the top surface position determining portion and in a direction of separating the top surface of the transport flat from the top surface position determining portion.

### Advantageous Effects of Invention

According to the invention, it is possible to provide a sample transport apparatus capable of easily replacing a sliding portion in a short time without changing a magnetic attractive force generated between a magnetic pole and a magnetic substance.

The distance between the magnetic pole and the magnetic substance can be kept constant even when a thickness of the transport flat becomes thin due to an abrasion caused by the sliding and the transport flat is replaced, when a difference from the thickness of the transport flat before the replacement occurs due to a variation in the thickness of the transport flat after the replacement, or when a plurality of transport flats overlap one another and the number of transport flats is changed.

Problems, configurations, and effects other than those described above will be clarified by the following description of embodiments.

### Brief Description of Drawings

[Fig. 1] Fig. 1 is a plan view illustrating a schematic configuration of an overall sample examination automation system including a sample transport apparatus according to Embodiment 1 of the present invention.
[Fig. 2] Fig. 2 is a side view of a sample transport apparatus according to a comparative example for comparison with embodiments of the present invention.
[Fig. 3] Fig. 3 is a side view of a sample transport apparatus according to Embodiment 1.
[Fig. 4] Fig. 4 is an illustrative diagram of a lifting mechanism according to Embodiment 1.
[Fig. 5] Fig. 5 is a side view of a sample transport apparatus according to Embodiment 2.
[Fig. 6] Fig. 6 is a side view of a sample transport apparatus according to Embodiment 3.
[Fig. 7] Fig. 7 is a side view of a sample transport apparatus according to Embodiment 4.

### Description of Embodiments

Hereinafter, embodiments of a sample transport apparatus according to the invention will be described with reference to the drawings.

In the following embodiments, components (also including element steps and the like) thereof are not necessarily essential unless otherwise specified or unless clearly considered to be essential in principle. In the drawings used in the description, the same or corresponding components are denoted by the same or similar reference signs, and repeated description of these components may be omitted.

### Embodiments

### (Embodiment 1)

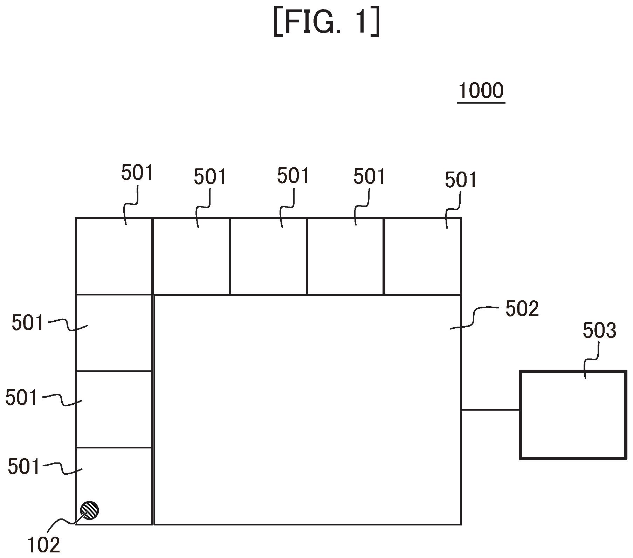

A sample transport apparatus 501 according to Embodiment 1 of the invention will be described with reference to Figs. 1 to 3.

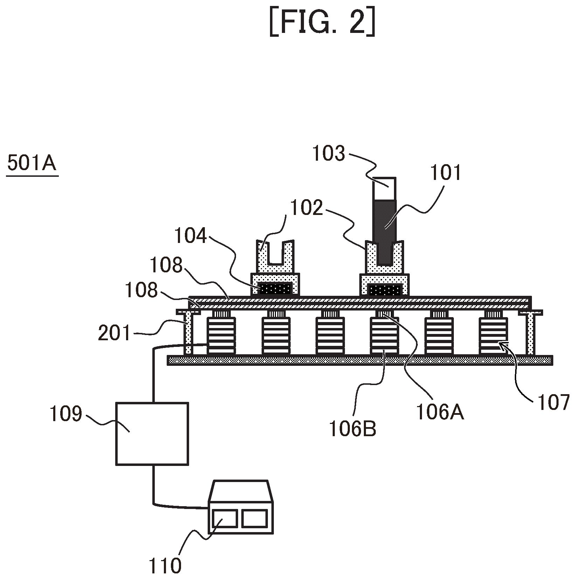

Fig. 1 is a plan view illustrating a schematic configuration of an overall sample examination automation system 1000 including the sample transport apparatus 501 according to Embodiment 1, and Fig. 2 is a side view of an apparatus according to a comparative example of the sample transport apparatus 501.

First, the overall configuration of the sample examination automation system 1000 including the sample transport apparatus 501 will be described with reference to Fig. 1.

The sample examination automation system 1000 according to Embodiment 1 illustrated in Fig. 1 is a system including an analyzer 502 for automatically analyzing components of a sample 101 (see Fig. 2) such as blood and urine.

Main components of the sample examination automation system 1000 are a plurality of sample transport apparatuses 501 (eight in Fig. 1) that transport a transport container 102 (see Fig. 2) on which a sample container 103 (see Fig. 2) containing the sample 101 is mounted or the empty transport container 102 on which the sample container 103 is not mounted to a predetermined destination, one or more analyzers 502 (one in Fig. 1), and a control apparatus 503 that integrally manages the sample examination automation system 1000.

The analyzer 502 is a unit that performs qualitative and quantitative analysis on the components of the sample 101 transported by the sample transport apparatus 501. Analysis items in this unit are not particularly limited, and a configuration of a known automatic analyzer for analyzing biochemical items and immune items can be adopted. Further, a plurality of analyzers 502 can be provided. The specifications of the analyzer 501 in this case may be the same or different, and are not particularly limited.

Each of the transport apparatuses 501 is an apparatus that transports the sample container 103 mounted on the transport container 102 and containing the sample 101 to a destination (the analyzer 502, an outlet, or the like) by sliding on a transport flat 108 (see Fig. 2) of a transport path by an electromagnetic force acting between a magnetic pole 107 (see Fig. 2) and a magnetic substance 104 (see Fig. 2) provided in the transport container 102. Details thereof will be described with reference to Fig. 2 and subsequent drawings.

The control apparatus 503 controls operations of the entire system including the transport apparatuses 501 and the analyzers 502, and is implemented by a computer including a display device such as a liquid crystal display, an input device, a storage device, a CPU, a memory, and the like. Control of an operation of each device is executed by the control apparatus 503 based on various programs recorded in the storage device.

Operation control processing executed by the control apparatus 503 may be integrated into one program, may be divided into a plurality of programs, or may be a combination thereof. A part or all of the programs may be implemented by dedicated hardware or may be modularized.

Fig. 1 illustrates a case where one analyzer 502 is provided, and the number of analyzers is not particularly limited and may be two or more. Similarly, the number of transport apparatuses 501 is not particularly limited and may be one or more.

In the sample examination automation system 1000, various types of sample pre-processing and post-processing units that perform pre-processing and post-processing on the sample 101 can be provided in addition to or in place of the analyzer 502. A detailed configuration of the sample pre-processing and post-processing unit is not particularly limited, and a configuration of a known pre-processing device can be adopted.

Next, a configuration of a transport apparatus 501A according to a comparative example with the present embodiment will be described with reference to Fig. 2.

As illustrated in Fig. 2, a plurality of transport containers 102 on which the sample container 103 containing the sample 101 is mounted are provided in the transport apparatus 501A. A magnet or the magnetic substance 104 is disposed on a bottom surface portion of each of the plurality of transport containers 102.

The magnetic substance 104 is formed of, for example, a permanent magnet such as neodymium or ferrite. Alternatively, the magnetic substance 104 may be formed of another magnet and a soft magnetic substance, and may be formed of an appropriate combination thereof.

The transport flat 108 is formed of a flat surface having a small frictional force, and the magnetic poles 107 are arranged on a back side (lower side) thereof. That is, the magnetic poles 107 are disposed on a lower surface side of the transport flat 108.

The one or more transport flats 108 are held by a frame 201.

The transport container 102 including the magnetic substance 104 moves so as to slide on the transport flat 108. In order to generate a transporting force thereof, the plurality of magnetic poles 107 each including a cylindrical core 106A and a coil 106B wound around an outer periphery of the core 106A are provided below the transport flat 108.

In the sample transport apparatus 501A, the magnetic pole 107 is responsible for transport of the magnetic substance 104, that is, transport of the transport container 102 or the transport container 102 on which the sample container 103 is mounted.

A driver 109 that applies a predetermined voltage to cause a predetermined current to flow through the coil 106B is connected to the magnetic pole 107. The magnetic pole 107 to which the voltage is applied by this driver 109 acts as an electromagnet, and attracts the magnetic substance 104 provided in the transport container 102 on the transport flat 108 by the electromagnetic force. After the transport container 102 is attracted by the magnetic pole 107, the application of the voltage to the magnetic pole 107 by the driver 109 is stopped, and a voltage is applied by the driver 109 to a different magnetic pole 107 adjacent to the magnetic pole 107 in the same manner as described above, thereby attracting the magnetic substance 104 provided in the transport container 102 to the adjacent magnetic pole 107. A generated driving force (electromagnetic force) may be a repulsive force instead of an attracting force.

By applying a procedure of the application to the adjacent different magnetic pole 107 in all the magnetic poles 107 of the plurality of transport apparatuses 501A constituting the transport path, the sample 101 contained in the sample container 103 held by the transport container 102 provided with the magnetic substance 104 is transported to the destination in the sample examination automation system.

A controller 110 calculates a current flowing through each coil 106B using various kinds of information such as position information, speed information, and weight information of the transport container 102, and outputs a command signal to each driver 109. The driver 109 applies a voltage to the corresponding coil 106B based on the command signal thereof.

In the above-described configuration, the magnetic pole 107 is fixed to a base of the transport apparatus, and the transport container 102 including the magnetic substance 104 is transported. Alternatively, the magnetic substance 104 may be fixed, and the transport container 102 including the magnetic pole 107 such as an electromagnet may be transported.

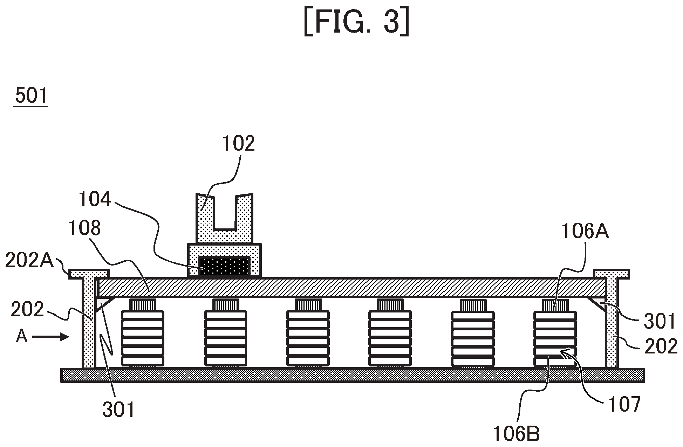

Next, a characteristic configuration of the transport apparatus 501 according to Embodiment 1 will be described with reference to Fig. 3.

The transport apparatus 501 includes a reference position frame 202. The reference position frame 202 includes a lifting mechanism 301 capable of being raised and lowered. The lifting mechanism 301 holds the transport flat 108 by sliding up and down, for example. The reference position frame 202 includes, for example, a top surface position determining portion 202A having a convex structure, and moves the lifting mechanism 301 to raise a top surface of the transport flat 108 until the top surface comes into contact with a lower surface of the top surface position determining portion 202A of the reference position frame 202. That is, the lifting mechanism 301 supports a lower surface of the transport flat 108, and moves the top surface of the transport flat 108 in a direction of coming into contact with the lower surface of the top surface position determining portion 202A and in a direction of separating from the top surface position determining portion 202A.

Accordingly, the top surface of the transport flat 108 can be positioned at a reference position of the reference position frame 202.

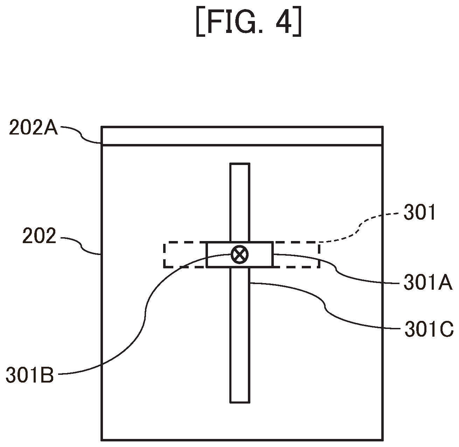

Fig. 4 is a diagram of the lifting mechanism 301, and is a diagram as viewed from a surface of the lifting mechanism 301 that is opposite to a surface supporting the transport flat 108 illustrated in Fig. 3 (diagram as viewed from a direction of an arrow A in Fig. 3).

In Fig. 4, the reference position frame 202 is formed with a slit (vertical groove) 301C through which the lifting mechanism 301 is movable in an upper-lower direction. The lifting mechanism 301 has a configuration in which the lifting mechanism 301 can be fixed at any position of the slit 301C by a fixing member 301A via the slit 301C and a fastening member 301B such as a screw. By adjusting the fastening member 301B, the lifting mechanism 301 is movable in the upper-lower direction in the slit 301C.

That is, the lifting mechanism 301 includes the fixing member 301A and the fastening member 301B, is inserted into the vertical groove 301C formed in the reference position frame 202, is moved in the vertical groove 301C, and is fixed to the reference position frame 202 by the fixing member 301A and the fastening member 301B.

A method for fixing the lifting mechanism 301 and sliding the lifting mechanism 301 up and down may be implemented by a known mechanism.

A magnitude of a magnetic force acting between the magnetic poles is proportional to a product of respective magnetic quantities and inversely proportional to a square of a distance between the magnetic poles. For example, when the magnetic pole 107 of the sample transport apparatus 501 is an electromagnet of a type that applies a pulse voltage to the coil 106B, and the magnetic substance 104 provided in the transport container 102 is a permanent magnet, if a thickness of the transport flat 108 is changed, the distance of the magnetic pole changes. Then, since the magnitude of the magnetic force changes, when the same pulse voltage as that before the thickness of the transport flat 108 is changed is applied, a behavior of transporting the transport container 102 changes.

Therefore, it is important to keep the distance between the electromagnet and the permanent magnet constant.

There may be some factors that change the distance between the magnetic pole 107 and the magnetic substance 104.

One factor is that the thickness of the transport flat 108 is reduced due to an abrasion caused by sliding. In this case, since the abrasion occurs only at a portion where the transported transport container 102 and the transport flat 108 slide on each other, the abrasion does not occur on the top surface of the transport flat 108 which is in contact with a lower surface side of the top surface position determining portion 202A holding the transport flat 108. Therefore, it is conceivable that the thickness of the transport flat 108 at a portion which is held by the reference position frame 202 and in which sliding by the transport container 102 does not occur does not change, and only the thickness of the transport flat 108 at a portion where the transport container 102 is transported becomes small. Then, the distance between the magnetic pole 107 and the magnetic substance 104 becomes shorter than the distance between the magnetic pole 107 and the magnetic substance 104 in the initial transport flat, the magnitude of the magnetic force acting between the magnetic pole 107 and the magnetic substance 104 changes, and thus it is necessary to replace the transport flat 108.

Another factor is that a thickness of the transport flat 108 after replacement is different from the thickness of the transport flat 108 before replacement. When the thickness of the transport flat 108 is different before and after replacement due to variations during manufacturing, if the transport flat 108 is held from below as in the sample transport apparatus 501A illustrated in Fig. 2, the distance between the magnetic poles is different. Therefore, the magnitude of the magnetic force acting between the magnetic pole 107 and the magnetic substance 104 changes.

Further, another factor is that a plurality of transport flats 108 overlap one another and the number of transport flats is changed. For example, as illustrated in Fig. 2, it is assumed that a plurality of overlapped transport flats 108 are held by the frame 201, and the uppermost transport flat 108 is abraded or deteriorates due to the transport container 102. If the uppermost transport flat 108 is removed and the transport flat 108 immediately therebelow is used as the uppermost transport flat 108, the new transport flat 108 that is not abraded or does not deteriorate appears on an uppermost surface.

However, in this case, the thickness of the removed transport flat 108 is reduced. For example, the same applies to a case where one or more protective members (sheets or films) are overlapped on the transport flat 108, and when the uppermost protective member that is abraded or deteriorates is removed, the next protective member can be used as the uppermost surface. In this case, a thickness of the removed protective member is also reduced.

As described above, it is assumed that the distance between the magnetic pole 107 and the magnetic substance 104 varies due to the change in the thickness of the transport flat 108. At this time, a method of adjusting the voltage to be applied according to the distance between the magnetic pole 107 and the magnetic substance 104 which are different from each other and changing the attracting force applied to the transport container 102 so as not to change the attracting force applied to the transport container 102 and not to change the transport behavior of the transport container 102 is also conceivable.

However, in order to improve stability of the force applied to the transport container 102, the distance between the magnetic pole 107 and the magnetic substance 104 is not changed as much as possible.

When it is necessary to replace the transport flat 108, it is necessary to reattach the transport container 102 such that the distance between the magnetic pole 107 of the sample transport apparatus 501 and the magnetic substance 104 provided in the transport container 102 is constant for the above reason.

It is not easy for a user to replace the transport flat 108 while appropriately adjusting the distance between the magnetic pole 107 and the magnetic substance 104 because of a large amount of work. In addition, since the large sample examination automation system 1000 may include several hundreds of the transport apparatuses 501, the number of times of replacement of the transport flat 108 is increased, which is even more time-consuming.

The transport apparatus 501 includes the reference position frame 202, so that the distance between the magnetic pole 107 and the magnetic substance 104 is determined by the reference position. In addition, when the transport flat 108 is lifted by the lifting mechanism 301, since the transport flat 108 is merely lifted so as to press the top surface of the transport flat 108 against the reference position frame 202, the transport flat 108 can be held to the position determined by the reference position frame 202 without measuring or adjusting the distance between the magnetic pole 107 and the magnetic substance 104 every time.

As described above, the sample transport apparatus 501 according to Embodiment 1 includes the lifting mechanism 301 capable of holding and lifting the transport flat 108 and the reference position frame 202 serving as the reference position of the transport flat 108. By lifting the transport flat 108 by the lifting mechanism 301 until the transport flat 108 comes into contact with the top surface position determining portion 202A of the reference position frame 202, the transport flat 108 can be easily positioned without changing a positional relationship between the magnetic pole 107 and the magnetic substance 104. Accordingly, the user can easily replace the transport flat 108 of the sample transport apparatus 501.

That is, according to Embodiment 1 of the invention, it is possible to provide the sample transport apparatus 501 capable of easily replacing sliding portions in a short time without changing a magnetic attractive force generated between the magnetic pole and the magnetic substance.

### (Embodiment 2)

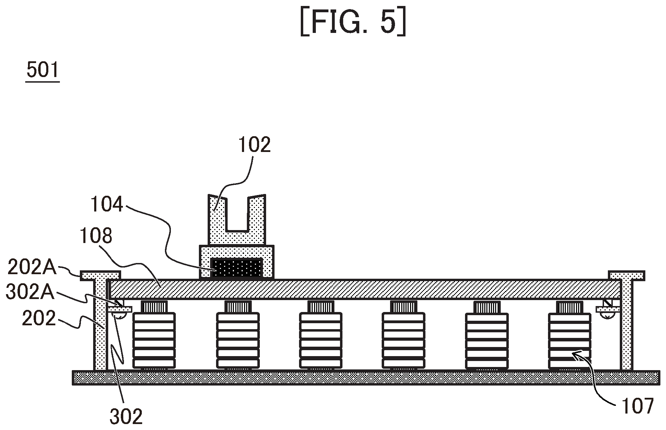

Next, Embodiment 2 according to the invention will be described with reference to Fig. 5.

In Fig. 5, the same reference signs as those in Figs. 1 to 3 denote the same components, and therefore, repeated descriptions are omitted.

In Embodiment 1, the lifting mechanism 301 that slides up and down and holds the transport flat 108 with respect to the reference position frame 202 is used, but in Embodiment 2, a change as compared with Embodiment 1 is that a lifting mechanism 302 that holds the transport flat 108 by a screw or the like pushed from the reference position frame 202 is used.

Fig. 5 is a side view of a sample transport apparatus according to Embodiment 2. Instead of the lifting mechanism 301 of the transport apparatus 501 according to Embodiment 1, the lifting mechanism 302 including a pushing mechanism (screw in the illustrated example) 302A such as a screw attached to the reference position frame 202 lifts the transport flat 108 until the transport flat 108 comes into contact with the lower surface of the top surface position determining portion 202A of the reference position frame 202. The lifting mechanism 302 is fixed to the reference position frame 202, and moves the transport flat 108 upward by moving the screw or the pushing mechanism attached to the reference position frame 202 upward.

Accordingly, the lifting mechanism 301 according to Embodiment 1 needs to fix the transport flat 108 by the fixing member 301A and the fastening member 301B, whereas the lifting mechanism 302 according to Embodiment 2 can fix the transport flat 108 by the screw or the pushing mechanism, and thus a configuration is simple and fixing work can be facilitated.

That is, according to Embodiment 2 of the invention, the same effect as that of Embodiment 1 can be attained, and the configuration is simple and the fixing work can be facilitated.

### (Embodiment 3)

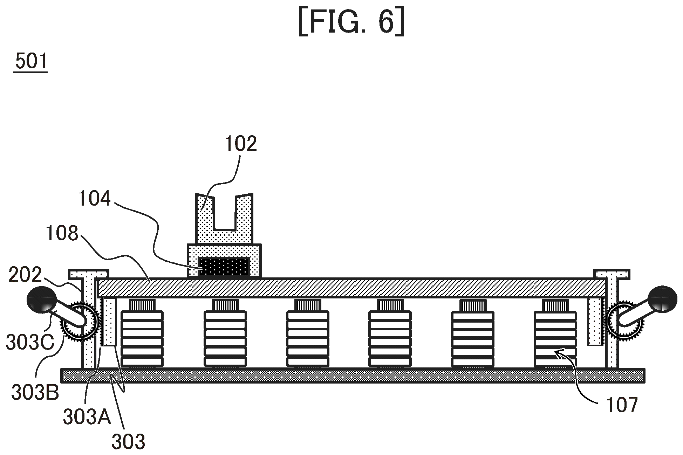

Hereinafter, Embodiment 3 of the invention will be described with reference to Fig. 6.

In Fig. 6, the same reference signs as those in Figs. 1 to 3 denote the same components, and therefore, repeated descriptions are omitted.

In Embodiment 1, the lifting mechanism 301 that slides up and down and holds the transport flat 108 with respect to the reference position frame 202 is used, but in Embodiment 3, a change as compared with Embodiment 1 is that a first gear 303A disposed in the upper-lower direction of the lifting mechanism 303 that holds the transport flat 108, a second gear 303B that is disposed in the reference position frame 202, meshes with the first gear 303A, and drives the lifting mechanism 303, and a handle 303C that is disposed in the reference position frame 202 and rotates the second gear 303B are used.

Fig. 6 is a side view of the sample transport apparatus 501 according to Embodiment 3.

In Fig. 6, the first gear 303A and the second gear 303B constitute a rack and pinion. The first gear 303A is formed on the lifting mechanism 303, and the lifting mechanism 303 is supported so as to be movable in the upper-lower direction (illustration of a support member is omitted).

The handle 303C is connected to a central axis of the second gear 303B, and by rotating the handle 303C, the second gear 303B is rotated, and the first gear 303A is driven in the upper-lower direction. The central axis of the second gear 303B extends from a front side to a back side of a sheet of Fig. 6 and is rotatably supported (illustration of the support member is omitted). An appropriate stopper (not illustrated) for stopping the lifting mechanism 303 from moving up and down is provided.

In Embodiment 1 and Embodiment 2, it is necessary for the user to insert a hand or a tool into the sample transport apparatus 501 having a narrow operation range in order to lift the transport flat 108, whereas according to the configuration in Embodiment 3, the lifting mechanism 303 can be easily moved up and down by the handle 303C located outside the transport apparatus 501 according to Embodiment 3, and a transport flat 10 can be moved up and down.

That is, according to Embodiment 3 of the invention, the same effect as that of Embodiment 1 can be attained, and the lifting mechanism 303 can be easily moved up and down to move the transport flat 108 up and down.

### (Embodiment 4)

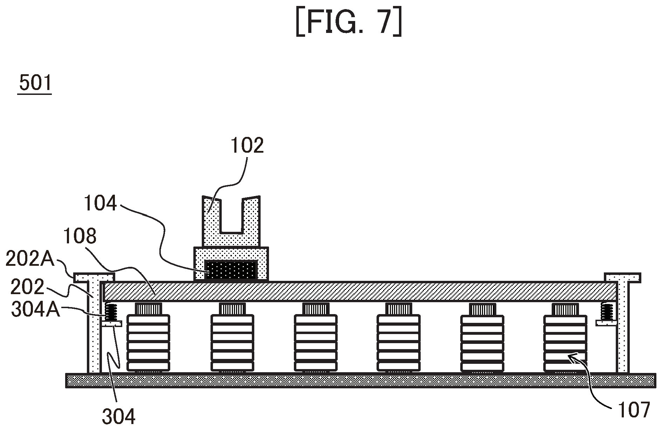

Next, Embodiment 4 according to the invention will be described with reference to Fig. 7.

In Fig. 7, the same reference signs as those in Figs. 1 to 3 denote the same components, and therefore, repeated descriptions are omitted.

In Embodiment 1, the lifting mechanism 301 that slides up and down and holds the transport flat 108 with respect to the reference position frame 202 is used, but in Embodiment 4, a change as compared with Embodiment 1 is that the lifting mechanism that holds the transport flat by an elastic force of an elastic pushing member 304A pushed from a lifting mechanism 304 of the reference position frame 202 is used.

Fig. 7 is a side view of the sample transport apparatus 501 according to Embodiment 4. Instead of the lifting mechanism 301 of the transport apparatus 501 according to Embodiment 1, the lifting mechanism 304 is provided in the reference position frame 202, and the transport flat 108 is automatically pushed upward until coming into contact with the top surface position determining portion 202A by the elastic pushing member 304A (a spring in the illustrated example) such as a spring attached to the lifting mechanism 304.

Accordingly, in Embodiment 1, Embodiment 2, or Embodiment 3, work of the user is required to raise the transport flat 108, whereas in Embodiment 4, the transport flat 108 can be automatically raised and held by a pushing up force by the elastic pushing member 304A.

When replacing the transport flat 108, it is assumed that the transport flat 108 is removed in a horizontal direction to replace the transport flat 108 after the holding by each of the lifting mechanisms 301, 302, and 303 held by the transport flat 108 is loosened in Embodiments 1, 2 and 3, but in the case of the elastic pushing member 304A such as the spring in Embodiment 4, it is assumed that the transport flat 108 can be removed in an upper direction when one side of the transport flat 108 is pressed down to incline the transport flat 108.

When the transport flat 108 of the sample transport apparatus 501 has a width of two rows or less, it is sufficient to replace the transport flat 108 by a method of laterally removing the transport flat 108, but when the transport flat 108 of the sample transport apparatus 501 has a width of three rows or more, a method of removing the transport flat 108 in the upper direction is useful.

According to Embodiment 4 of the invention, the same effects as those of Embodiment 1 can be attained, and the transport flat 108 can be replaced more easily.

In Embodiments 1 to 4 described above, the illustrated example is an example in which one transport flat 108 is provided. Alternatively, the invention is also applicable to an example in which a plurality of transport flats 108 are supported on the reference position frame 202.

In Embodiments 1 to 4 described above, the magnetic substance 104 is provided in the transport container 102 on the transport flat 108, and the plurality of magnetic poles 107 are disposed below the transport flat 108. Alternatively, the invention can also be applied to an example in which the magnetic pole 107 is provided in the transport container 102 on the transport flat 108, and the plurality of magnetic substances 104 are disposed below the transport flat 108.

### Reference Signs List

- 1000: sample examination automation system
- 101: sample
- 102: transport container
- 103: sample container
- 104: magnetic substance
- 106A: core
- 106B: coil
- 107: magnetic pole
- 108: transport flat
- 109: driver
- 110: controller
- 201: frame
- 202: reference position frame
- 202A: top face position determining portion
- 301, 302, 303, 304: lifting mechanism
- 301A: fixing member
- 301B: fastening member
- 301C: slit
- 302A: pushing mechanism
- 303A: first gear
- 303A: second gear
- 303C: handle
- 304A: elastic pushing member
- 501, 501A: sample transport apparatus
- 502: analyzer
- 503: control apparatus

## Claims

1. A sample transport apparatus for transporting a sample container placed on a top face of a transport flat by use of an electromagnetic force acting between either a magnet or a magnetic substance and a magnetic pole,
the sample transport apparatus comprising a reference position frame that detachably supports the transport flat, the reference position frame having
a top face position determining portion that comes into contact with the top face of the transport flat to determine a position of the top face, and
a lifting mechanism that supports a lower surface of the transport flat to move it in a direction of bringing the top face of the transport flat into contact with a lower surface of the top face position determining portion and in a direction of separating the top face of the transport flat from the top face position determining portion.

2. The sample transport apparatus according to claim 1, wherein
the magnetic pole is placed under the lower surface of the transport flat,
either the magnet or the magnetic substance is placed in a transport container for transporting the sample container,
the lifting mechanism has a fixing member and a fastening member,
the lifting mechanism is inserted into and moved in a vertical groove formed in the reference position frame, and
the lifting mechanism is fixed to the reference position frame by the fixing member and the fastening member.

3. The sample transport apparatus according to claim 1, wherein
the magnetic pole is placed under the lower surface of the transport flat,
either the magnet or the magnetic substance is placed in a transport container for transporting the sample container,
the lifting mechanism has a pushing mechanism for pushing the lower surface of the transport flat to bring the top face of the transport flat into contact with the lower surface of the top face position determining portion.

4. The sample transport apparatus according to claim 1, wherein
the magnetic pole is placed under the lower surface of the transport flat,
either the magnet or the magnetic substance is placed in a transport container for transporting the sample container,
the sample transport apparatus comprises:
a first gear that is placed in an upper-lower direction of the lifting mechanism;
a second gear that is placed on the reference position frame and meshes with the first gear to drive the lifting mechanism; and
a handle that is placed on the reference position frame to rotate the second gear.

5. The sample transport apparatus according to claim 1, wherein
the magnetic pole is placed under the lower surface of the transport flat,
either the magnet or the magnetic substance is placed in a transport container for transporting the sample container,
the lifting mechanism has an elastic pushing member pushing the lower surface of the transport flat to bring the top face of the transport flat into contact with the lower surface of the top face position determining portion.

6. The sample transport apparatus according to any one of claims 1 to 5, wherein
the plurality of transport flats are supported by the reference position frame.
